# EUROPÄISCHE PATENTANMELDUNG

(11) **EP 1 842 733 A1**
(43) Veröffentlichungstag der Anmeldung: **10.10.2007**
(21) Anmeldenummer: 07102120.8
(22) Anmeldetag: 12.02.2007
(51) Int. Cl.: B60R 21/0132

(54) **Verfahren und Vorrichtungen zum Auslösen einer Rückhaltevorrichtung eines Fahrzeugs**

(30) Priorität: 04.04.2006 DE 102006015747
(71) Anmelder: ROBERT BOSCH GMBH, 70442 Stuttgart (DE)
(72) Erfinder: Schuller, Hermann, 75223, Niefern-Oeschelbronn (DE); Wellhoefer, Matthias, 70499, Stuttgart (DE); Kaerner, Christof, 73095, Albershausen (DE)

(57) **Zusammenfassung**

Die vorliegende Erfindung stellt Verfahren zum Auslösen einer Rückhaltevorrichtung (21) eines Fahrzeugs (1, 31) und entsprechende Vorrichtungen (15, 35) bereit. Eines der Verfahren weist folgende Verfahrensschritte auf:
- Erzeugen eines ersten Beschleunigungssignals mit einem in einer ersten Fahrzeughälfte (3) bezüglich der Längsachse (2) des Fahrzeugs (1) angeordneten ersten Beschleunigungssensor (5),
- Erzeugen eines zweiten Beschleunigungssignals mit einem in einer zweiten Fahrzeughälfte (4) bezüglich der Längsachse (2) des Fahrzeugs (1) angeordneten zweiten Beschleunigungssensor (7), wobei die beiden Beschleunigungssensoren (5, 7) jeweils eine Beschleunigung des Fahrzeugs (1) in Fahrtrichtung aufnehmen,
- Erzeugen eines dritten Beschleunigungssignals aus dem ersten und zweiten Beschleunigungssignal durch Kombinieren des ersten und zweiten Beschleunigungssignals,
- Auswerten des dritten Beschleunigungssignals mit einem Auswertealgorithmus, der für ein zentrales Beschleunigungssignal erstellt wurde, das einem zentral an einem weiteren Fahrzeug (50) angeordneten zentralen Beschleunigungssensor (51) zugeordnet ist und eine Beschleunigung des weiteren Fahrzeugs (50) in Fahrtrichtung aufnimmt, und
- Auslösen einer Rückhaltevorrichtung (21) des Fahrzeugs (1) aufgrund der Auswertung des dritten Beschleunigungssignals.

## Beschreibung

Die vorliegende Erfindung betrifft ein Verfahren und Vorrichtungen zum Auslösen einer Rückhaltevorrichtung eines Fahrzeugs.

### Stand der Technik

Zum Erkennen eines Front- oder Heckaufpralls eines Objekts auf ein Fahrzeug wird üblicherweise mit einer Auswertevorrichtung ein Beschleunigungssignal eines zentral am Fahrzeug befestigten Beschleunigungssensor, der eine Beschleunigung in Fahrtrichtung des Fahrzeugs misst, ausgewertet. Aufgrund der Auswertung wird bei einem Front- oder Heckaufprall eine Rückhaltevorrichtung des Fahrzeuges ausgelöst. Rückhaltevorrichtungen sind z.B. ein Airbag oder ein Gurtstraffer.

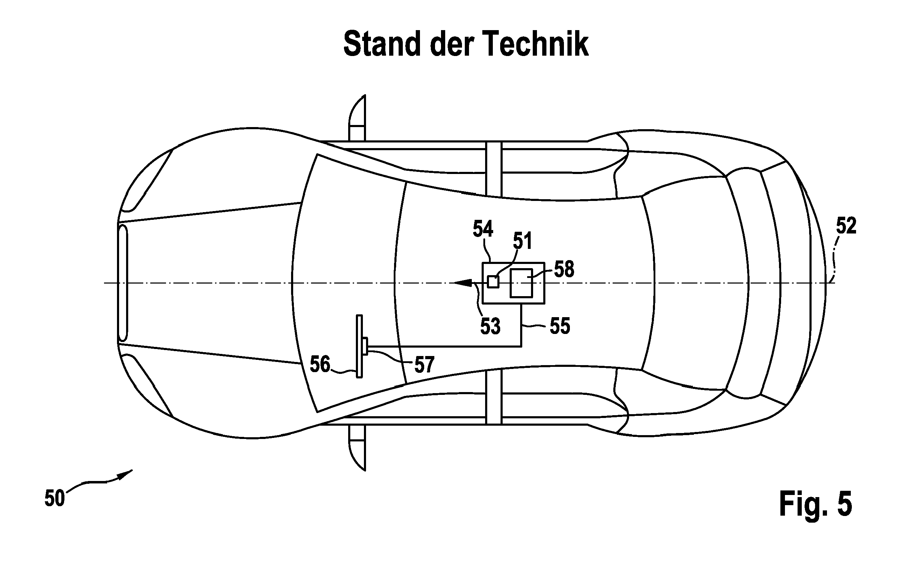

Die Fig. 5 zeigt ein Fahrzeug 50 mit einem zentralen Beschleunigungssensor 51, der zentral am Fahrzeug 50 befestigt ist und eine Beschleunigung des Fahrzeugs 50 längs der Längsachse 52 des Fahrzeugs 50 und in Fahrtrichtung misst, was mit einem Pfeil 53 angedeutet ist. Der Beschleunigungssensor 51 ist in einer zentral am Fahrzeug 50 befestigten Auswertevorrichtung 54 integriert, die über eine elektrische Leitung 55 mit einem in dem Lenkrad 56 des Fahrzeugs 50 untergebrachten Airbag 57 als Beispiel einer Rückhaltevorrichtung verbunden ist. Die Auswertevorrichtung 54 umfasst z.B. einen Mikroprozessor 58, auf dem ein allgemein bekanntes Rechnerprogramm läuft, das das Beschleunigungssignal des zentralen Beschleunigungssensors 51 auswertet, indem es das Beschleunigungssignal z.B. mit Schwellwerten vergleicht und aufgrund des Vergleichs auf einen Front- oder Heckaufprall eines nicht gezeigten Objekts auf das Fahrzeug 50 schließt. Bei einem erkannten Front- oder Heckaufprall löst die Auswertevorrichtung 54 den Airbag 57 aus. Für ein verbessertes Auslöseverhalten berücksichtigt das Rechnerprogramm noch aus dem Beschleunigungssignal abgeleitete Signale.

Die EP 0 866 971 B1 offenbart eine Sensoranordnung für ein Kraftfahrzeug zum Erkennen eines Auf pralls. Die Sensoranordnung umfasst eine Vorrichtung zum Aufnehmen einer Beschleunigung in jeder Fahrzeughälfte, bezogen auf die Fahrzeuglängsachse, wobei jede Vorrichtung zwei Beschleunigungssensoren mit unterschiedlich gerichteten Empfindlichkeitsachsen aufweist. Die den Beschleunigungen bezüglich der Längsachse zugeordneten Beschleunigungssignale werden einer zentralen Auswertevorrichtung zugeführt, die aufgrund dieser Beschleunigungssignale einen Frontaufprall erkennt und entsprechend eine Rückhaltevorrichtung auslöst. Alternativ werden die Beschleunigungssignale jeder Fahrzeughälfte mit jeweils einer Auswertevorrichtung ausgewertet.

### Offenbarung der Erfindung

Das erfindungsgemäße Verfahren zum Auslösen einer Rückhaltevorrichtung eines Fahrzeugs weist folgende Verfahrensschritte auf:
- Erzeugen eines ersten Beschleunigungssignals mit einem in einer ersten Fahrzeughälfte bezüglich der Längsachse des Fahrzeugs angeordneten ersten Beschleunigungssensor,
- Erzeugen eines zweiten Beschleunigungssignals mit einem in einer zweiten Fahrzeughälftebezüglich der Längsachse des Fahrzeugs angeordneten zweiten Beschleunigungssensor, wobei die beiden Beschleunigungssensoren jeweils eine Beschleunigung des Fahrzeugs in Fahrtrichtung aufnehmen,
- Erzeugen eines dritten Beschleunigungssignals aus dem ersten und zweiten Beschleunigungssignal durch Kombinieren des ersten und zweiten Beschleunigungssignals,
- Auswerten des dritten Beschleunigungssignals mit einem Auswertealgorithmus, der für ein zentrales Beschleunigungssignal erstellt wurde, das einem zentral an einem weiteren Fahrzeug angeordneten zentralen Beschleunigungssensor zugeordnet ist und eine Beschleunigung des weiteren Fahrzeugs in Fahrtrichtung aufnimmt, und
- Auslösen einer Rückhaltevorrichtung des Fahrzeugs aufgrund der Auswertung des dritten Beschleunigungssignals.

Das erfindungsgemäße Verfahren wird für ein Fahrzeug verwendet, bei dem der erste Beschleunigungssensor innerhalb der einen Fahrzeughälften bezüglich der Längsachse des Fahrzeugs und der zweite Beschleunigungssensor innerhalb der anderen Fahrzeughälfte angeordnet ist. Die beiden Beschleunigungssensoren sind beispielsweise an den beiden B-Säulen des Fahrzeugs befestigt und messen jeweils eine Beschleunigung des Fahrzeugs mit wenigstens einer Beschleunigungskomponente in Fahrtrichtung, also bezüglich der Längsachse des Fahrzeugs. Insbesondere bei einer Kombination der beiden Beschleunigungssensoren mit jeweils einem weiteren Beschleunigungssensor, der eine Beschleunigung des Fahrzeugs quer zur Fahrtrichtung misst, kann diese Sensoranordnung sowohl zum Erkennen eines Front- und/oder Heckaufpralls als auch zum Erkennen eines Seitenaufpralls des Fahrzeugs verwendet werden. Um jedoch auf einen üblichen zentralen Beschleunigungssensor, der zentral am Fahrzeugs befestigt wäre und eine Beschleunigung des Fahrzeugs in Fahrtrichtung misst, verzichten zu können, müssen die Beschleunigungskomponenten der Beschleunigungssignale des ersten und zweiten Beschleunigungssensors geeignet ausgewertet werden.

Der erste und der zweite Beschleunigungssensor misst jeweils ebenfalls eine Beschleunigung des Fahrzeugs in Fahrtrichtung. Erfindungsgemäß wird nun das von diesen Beschleunigungssensoren stammende erste und zweite Beschleunigungssignal zum dritten Beschleunigungssignal kombiniert, wobei das dritte Beschleunigungssignal wiederum mit dem Auswertealgorithmus ausgewertet wird, der basierend auf dem zentralen Beschleunigungssignal des zentralen Beschleunigungssensors entwickelt wurde. Da solche Auswertealgorithmen bereits bekannt sind, ist es aufgrund des erfindungsgemäßen Verfahrens unnötig, einen neuen Auswertealgorithmus für die beiden in den beiden Fahrzeughälften angeordneten Beschleunigungssensoren zu entwickeln.

Das dritte Beschleunigungssignal wird bevorzugt durch eine Mittelwertbildung des ersten und zweiten Beschleunigungssignals gebildet. Weitere Möglichkeiten zum Erhalten des dritten Beschleunigungssignals umfassen eine Maximal- oder Minimalwertbildung aus dem ersten und zweiten Beschleunigungssignal .

Um die Zuverlässigkeit des Auslösens der Rückhaltevorrichtung zu erhöhen, können bekannte Auswertealgorithmen wenigstens eine Unterprogrammroutine umfassen, der für die Auswertung ein aus dem zentralen Beschleunigungssignal abgeleitetes Signal zugeführt wird. Unter einem abgeleiteten Signal wird nicht nur eine Ableitung im mathematischen Sinne verstanden, sondern eine jegliche Abänderung des entsprechenden Signals. Nach einer Ausführungsform des erfindungsgemäßen Verfahrens werden anstelle dieses abgeleiteten Signals der Unterprogrammroutine des Auswertealgorithmus ein aus dem ersten, zweiten und/oder dritten Beschleunigungssignal abgeleitetes Signal zugeführt.

Ein alternatives erfindungsgemäßes Verfahren zum Auslösen einer Rückhaltevorrichtung eines Fahrzeugs weist folgende Verfahrensschritte auf:
- Erzeugen eines ersten Beschleunigungssignals mit einem in einer ersten Fahrzeughälfte bezüglich der Längsachse des Fahrzeugs angeordneten ersten Beschleunigungssensors, wobei das erste Beschleunigungssignal eine Beschleunigung des Fahrzeugs in Fahrtrichtung aufnimmt,
- Auswerten des ersten Beschleunigungssignals mit einem Auswertealgorithmus, der für ein zentrales Beschleunigungssignal erstellt wurde, das von einem zentral an einem weiteren Fahrzeug angeordneten zentralen Beschleunigungssensor stammt, der eine Beschleunigung in Fahrtrichtung des weiteren Fahrzeugs aufnimmt,
- Erzeugen eines zweiten Beschleunigungssignals mit einem in einer zweiten Fahrzeughälfte bezüglich der Längsachse des Fahrzeugs angeordneten zweiten Beschleunigungssensors, wobei das zweite Beschleunigungssignal einer Beschleunigung in Fahrtrichtung des Fahrzeugs aufnimmt,
- Auswerten des zweiten Beschleunigungssignals mit dem Auswertealgorithmus und
- Auslösen einer Rückhaltevorrichtung des Fahrzeugs aufgrund des ersten und zweiten ausgewerteten Beschleunigungssignals.

Gemäß dem alternativen erfindungsgemäßen Verfahren werden die beiden Beschleunigungssignale des ersten und zweiten Beschleunigsensors, die in den beiden Fahrzeughälften angeordnete sind, jeweils mit dem Auswertealgorithmus analysiert, der für den zentralen Beschleunigungssensor entwickelt wurde. Aufgrund der beiden ausgewerteten Bescheunigungssignale wird die Rückhaltevorrichtung gegebenenfalls ausgelöst. Dies wird beispielsweise erreicht, indem aus den beiden ausgewerteten Beschleunigungssignalen durch Maximalwert- oder Minimalwertbildung ein Auslösesignal erzeugt wird und die Rückhaltevorrichtung dann ausgelöst wird, wenn dieses Auslösesignals wenigstens ein bestimmtes Kriterium erfüllt. Auch bei dem alternativen erfindungsgemäßen Verfahren wird der bereits bekannte, für den zentralen Beschleunigungssensor entwickelte Auswertealgorithmus verwendet, wodurch sich wegen des erfindungsgemäßen Verfahrens eine Neuentwicklung eines speziell für die Anordnung der beiden Beschleunigungssensoren in den beiden Fahrzeughälften vorgesehener Auswertealgorithmus erübrigt.

Nach einer Variante des erfindungsgemäßen Verfahrens umfasst der Auswertealgorithmus wenigstens eine Unterprogrammroutine, die bei Verwendung des zentralen Beschleunigungssensors dafür vorgesehen ist, zusätzlich wenigstens ein aus dem zentralen Beschleunigungssignal abgeleitetes Signal für das Auslösen der Rückhaltevorrichtung auszuwerten, und die Auswertung des ersten und/oder zweiten Beschleunigungssignals sich auch auf eine Auswertung eines aus dem ersten und/oder zweiten Beschleunigungssignal abgeleiteten Signals stützt.

Die erfindungsgemäße Vorrichtung zum Auslösen einer Rückhaltevorrichtung eines Fahrzeugs mit einer ersten Fahrzeughälfte und einer zweiten Fahrzeughälfte bezüglich der Längsachse des Fahrzeugs umfasst den in der ersten Fahrzeughälfte angeordneten ersten Beschleunigungssensor zum Erzeugen eines ersten Beschleunigungssignals in Fahrtrichtung, den in der zweiten Fahrzeughälfte angeordneten zweiten Beschleunigungssensor zum Erzeugen des zweiten Beschleunigungssignals in Fahrtrichtung und die Auswertevorrichtung, auf der der Auswertealgorithmus läuft, der für das zentrale Beschleunigungssignal erstellt wurde, wobei die Auswertevorrichtung das durch Kombinieren des ersten und zweiten Beschleunigungssignals erhaltene dritte Beschleunigungssignal auswertet.

Alternativ ist die Auswertevorrichtung derart eingerichtet, sie mit dem Auswertealgorithmus das erste Beschleunigungssignal und das zweite Beschleunigungssignal auswertet und ein Auslösesignal für die Rückhaltevorrichtung des Fahrzeugs aufgrund der beiden ausgewerteten Beschleunigungssignale erzeugt.

Da erfindungsgemäß ein bereits bekannter Auswertealgorithmus verwendet wird, bedarf es keiner neuen Entwicklung eines speziell auf die Anordnung der beiden Beschleunigungssensoren in den beiden Fahrzeughälften abgestimmten Auswertealgorithmus, wodurch Entwicklungszeit und daher Kosten gespart werden können.

### Kurze Beschreibung der Zeichnungen

Figur 1 ein Fahrzeug mit einer ersten Ausführungsform einer erfindungsgemäßen Vorrichtung,
Figur 2 ein Flussdiagramm zur Veranschaulichung einer ersten Ausführungsform des erfindungsgemäßen Verfahrens,
Figur 3 ein Fahrzeug mit einer zweiten Ausführungsform einer erfindungsgemäßen Vorrichtung,
Figur 4 ein Flussdiagramm zur Veranschaulichung einer zweiten Ausführungsform des erfindungsgemäßen Verfahrens und
Figur 5 ein Fahrzeug mit einer gewöhnlichen Vorrichtung zum Auslösen einer Rückhaltevorrichtung.

### Ausführungsformen der Erfindung

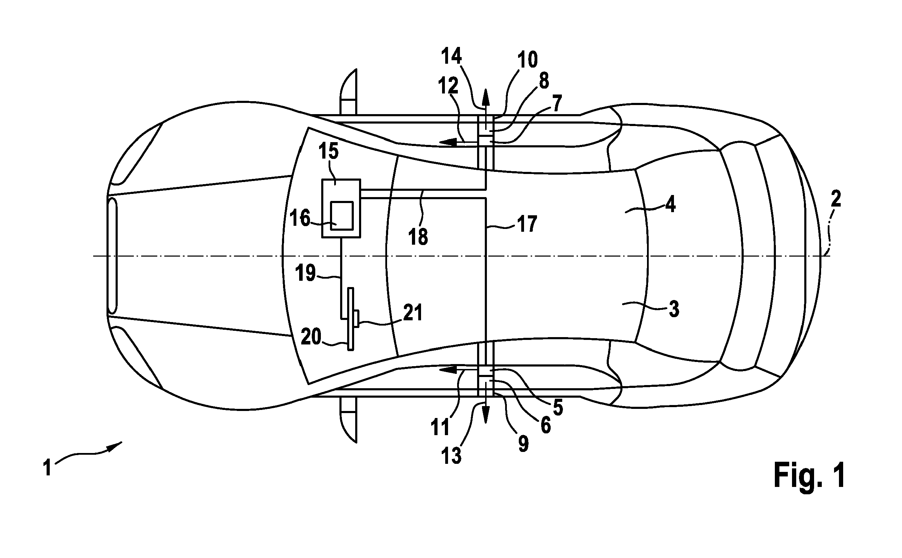

Die Figur 1 zeigt einen Personenkraftwagen 1 als Fahrzeug mit einer Längsachse 2, die den Personenkraftwagen 1 in eine erste Fahrzeughälfte 3 und eine zweite Fahrzeughälfte 4 teilt. In der ersten Fahrzeughälfte 3, die im Falle des vorliegenden Ausführungsbeispiels der Fahrerseite zugeordnet ist, ist im Personenkraftwagen 1 ein Beschleunigungssensor 5 und ein Beschleunigungssensor 6 und in der zweiten Fahrzeughälfte 4 ist ein Beschleunigungssensor 7 und ein Beschleunigungssensor 8 befestigt. Im Falle des vorliegenden Ausführungsbeispieles sind die Beschleunigungssensoren 5-8 jeweils in den B-Säulen 9, 10 des Personenkraftwagens 1 eingebaut.

Im Falle des vorliegenden Ausführungsbeispieles sind die Beschleunigungssensoren 5, 7 jeweils derart ausgerichtet, dass sie eine Beschleunigung des Personenkraftwagens 1 in Fahrtrichtung aufnehmen.

Das ist mit Pfeilen 11, 12 angedeutet. Die beiden Beschleunigungssensoren 6, 8 sind derart ausgerichtet, dass sie jeweils eine Beschleunigung des Personenkraftwagens 1 quer zur Fahrtrichtung aufnehmen, was durch Pfeile 13, 14 veranschaulicht ist.

Der Personenkraftwagen 1 umfasst ferner eine Auswertevorrichtung 15 mit im Falle des vorliegenden Ausführungsbeispiels einen Mikroprozessor 16. Die Auswertevorrichtung 15 ist einerseits mit elektrischen Leitungen 17, 18 mit den Bescheunigungssensoren 5-8 verbunden, sodass die von den Beschleunigungssensoren 5-8 stammenden Beschleunigungssignalen über die elektrischen Leitungen 17, 18 der Auswertevorrichtung 15 bzw. dessen Mikroprozessor 16 zugeführt werden. Die Auswertevorrichtung 15 ist andererseits über eine elektrische Leitung 19 mit einem im Lenkrad 20 des Personenkraftwagens 1 angeordneten Airbag 21 verbunden. Auf dem Mikroprozessor 16 läuft ein Rechnerprogramm, das die Beschleunigungssignale der Beschleunigungssensoren 5-8 verarbeitet und aufgrund der verarbeiteten Beschleunigungssignale gegebenenfalls den Airbag 21 über die elektrische Leitung 19 auslöst.

Die Auswertevorrichtung 15 ist dafür vorgesehen, aufgrund der von den Beschleunigungssensoren 4-8 stammenden Beschleunigungssignalen auf einen Front-, Heck- oder Seitenaufprall eines nicht näher dargestellten Objekts zu schließen und gegebenenfalls über die elektrische Leitung 19 den Airbag 21 auszulösen. Zu diesem Zweck laufen auf dem Mikroprozessor 16 geeignete Rechnerprogramme.

Um einen Seitenaufprall auf den Personenkraftwagen 1 zu erkennen, wertet der Mikroprozessor 16 die Beschleunigungssignale der beiden Beschleunigungssensoren 6, 8, die eine Beschleunigung des Personenkraftwagens 1 quer zur Fahrtrichtung aufnehmen, aus, indem das auf dem Mikroprozessor 16 diese Beschleunigungssignale mit vorgegebene Schwellwerten vergleicht. Überschreitet einer dieser Beschleunigungssignale seinen zugeordneten Schwellwert, so löst die Auswertevorrichtung 15 den Airbag 21 aus.

Für das Erkennen eines Front- oder Heckaufpralls werden die von den Beschleunigungssensoren 5, 7 stammenden Beschleunigungssignale verwendet, also die Beschleunigungssignale die einer Beschleunigung in Fahrtrichtung zugeordnet sind. Diese Beschleunigungssignale werden ebenfalls dem Mikroprozessor 16 zugeführt, der zunächst durch Mittelwertbildung aus diesen beiden Beschleunigungssignalen ein resultierendes Beschleunigungssignal erzeugt. Dieses resultierende Beschleunigungssignal wird dem Auswertealgorithmus zugeführt, der dem Auswertealgorithmus gemäß dem Stand der Technik entspricht, wie er in der Einleitung beschrieben ist, d.h. der Auswertealgorithmus für das Erkennen eines Heck- oder Frontaufpralls ist derart ausgeführt, dass er für den zentralen Beschleunigungssensor 51 des Fahrzeugs 50 der Fig. 5 entwickelt wurde.

Der für den zentralen Beschleunigungssensor 51 entwickelte Auswertealgorithmus umfasst im Falle des vorliegenden Ausführungsbeispiels Unterprogrammroutinen, denen bei Verwendung mit dem zentralen Beschleunigungssensor 51 auch abgeleitete Signale, die z.B. durch eine mathematische Ableitung des Beschleunigungssignals des Beschleunigungssensors erzeugt werden. Die abgeleiteten Signale werden ebenfalls zum Erkennen eines Heck- oder Frontaufpralls berücksichtigt.

Im Falle des in der Fig. 1 gezeigten vorliegenden Ausführungsbeispiels werden auch abgeleitete Signale des resultierenden Beschleunigungssignals dem Auswertealgorithmus zugeführt.

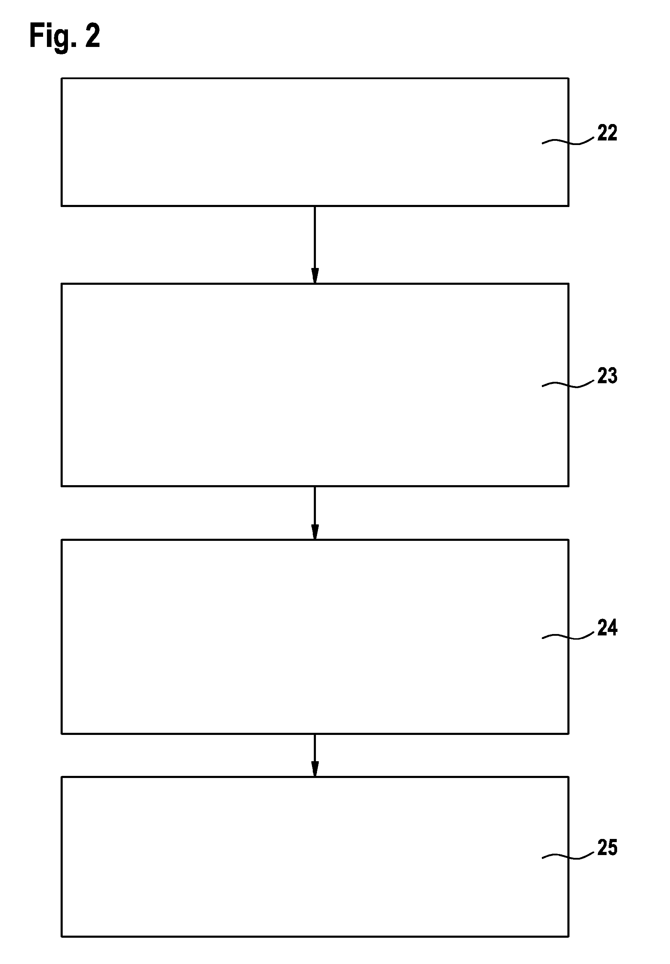

Somit ergibt sich ein in der Fig. 2 dargestellter Verlauf zum Erkennen eines Front- oder Heckaufpralls des Personenkraftwagen 1. Durch eine Beschleunigung des Personenkraftwagens 1 erzeugen die Beschleunigungssensoren 5, 7 Beschleunigungssignale in Fahrtrichtung des Personenkraftwagens 1 (Schritt 22). Die Bescheunigungssignale werden dem Mikroprozessor 16 zugeführt, der das resultierende Beschleunigungssignal erzeugt (Schritt 23), das wiederum dem Auswertealgorithmus zugeführt wird (Schritt 24), der für den zentralen Beschleunigungssensor 51 entwickelt wurde. Deutet die Auswertung des resultierenden Beschleunigungssignals auf einen Heck- oder Frontaufprall hin, so wird der Airbag 21 ausgelöst (Schritt 25).

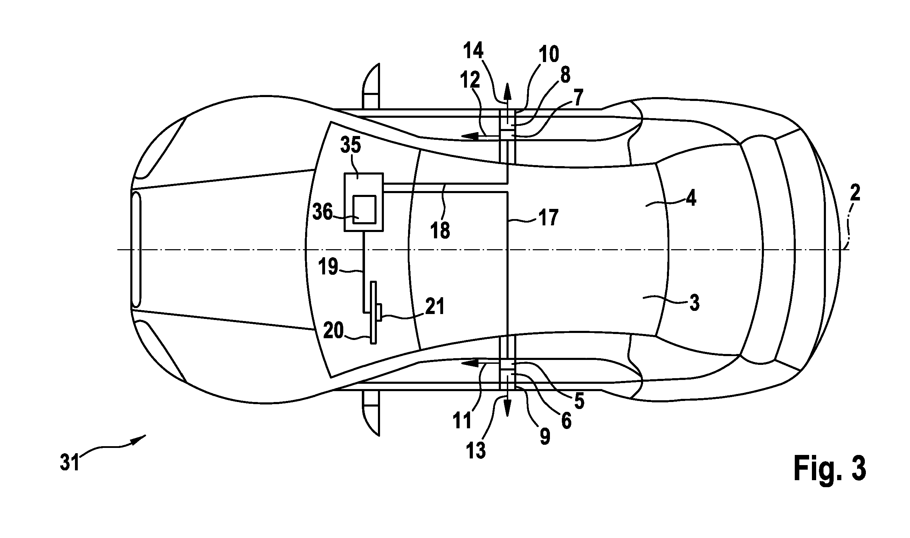

Die Figur 3 zeigt einen weiteren Personenkraftwagen 31 als Fahrzeug mit einer weiteren Ausführungsform einer erfindungsgemäßen Vorrichtung zum Auslösen einer Rückhaltevorrichtung. Wenn folgend nicht anders beschrieben, dann sind Bestandteile des in der Figur 3 dargestellten Personenkraftwagen 31, welche mit Bestandteilen des in der Figur 1 gezeigten Personenkraftwagens 1 weitgehend bau- und funktionsgleich sind, mit denselben Bezugszeichen versehen.

Der in der Figur 3 dargestellte Personenkraftwagen 31 unterscheidet sich im Wesentlichen von dem in der Figur 1 gezeigten Personenkraftwagen 1 durch dessen Auswertevorrichtung 35, die den Airbag 21 im Falle eines Front- Heck- oder Seitenaufpralls auslöst.

Im Falle des vorliegenden Ausführungsbeispieles umfasst die Auswertevorrichtung 35 einen Mikroprozessor 36, auf dem ebenfalls ein Rechnerprogramm zum Erkennen eines Front- Heck- oder Seitenaufpralls läuft. Um einen Seitenaufprall zu erkennen, wertet der Mikroprozessor 36 die Beschleunigungssignale der beiden Beschleunigungssensoren 6, 8, die eine Beschleunigung des Personenkraftwagens 31 quer zur Fahrtrichtung aufnehmen, genauso aus wie der Mikroprozessor 16 des Personenkraftwagens 1.

Für das Erkennen eines Front- oder Heckaufpralls werden ebenfalls die von den Beschleunigungssensoren 5, 7 stammenden Beschleunigungssignale verwendet, also die Beschleunigungssignale, die einer Beschleunigung in Fahrtrichtung zugeordnet sind. Diese Beschleunigungssignale werden ebenfalls dem Mikroprozessor 36 zugeführt, der jedoch im Falle des vorliegenden Ausführungsbeispiels die beiden Beschleunigungssignale jeweils separat mit dem Auswertealgorithmus gemäß dem Stand der Technik, wie er in der Einleitung beschrieben ist, auswertet, d.h. der Mikroprozessor 36 wertet die beiden Beschleunigungssignale jeweils mit dem Auswertealgorithmus für das Erkennen eines Heck- oder Frontaufpralls aus, der für den zentralen Beschleunigungssensor 51 des Fahrzeugs 50 der Fig. 5 entwickelt wurde. Somit ergeben sich zwei ausgewertete Beschleunigungssignale, und zwar ein dem in der ersten Fahrzeughälfte 3 angeordneten Beschleunigungssensor 5 zugeordnetes erstes ausgewertetes Beschleunigungssignal und ein dem in der zweiten Fahrzeughälfte 4 angeordneten Beschleunigungssensor 7 zugeordnetes zweites ausgewertetes Beschleunigungssignal.

Das auf dem Mikroprozessor 36 laufende Rechnerprogramm ist ferner derart ausgeführt, dass es auf grund der beiden ausgewerteten Beschleunigungssignale ein Auslösesignal erzeugt, das gegebenenfalls den Airbag 21 bei einem Front- oder Heckaufprall auslöst.

Das Auslösesignal wird erzeugt, indem im Allgemeinen die beiden ausgewerteten Beschleunigungssignale miteinender kombiniert werden und speziell im Falle des vorliegenden Ausführungsbeispiels der Maximalwert der beiden ausgewerteten Beschleunigungssignale mit vorab festgelegten Schwellwerten verglichen wird. Bei Überschreiten des Maximalwerts der beiden ausgewerteten Beschleunigungssignale wird der Airbag 21 ausgelöst.

Der für den zentralen Beschleunigungssensor 51 entwickelte Auswertealgorithmus umfasst im Falle des vorliegenden Ausführungsbeispiels Unterprogrammroutinen, denen bei Verwendung mit dem zentralen Beschleunigungssensor 51 auch abgeleitete Signale, die z.B. durch eine mathematische Ableitung des Beschleunigungssignals des Beschleunigungssensors erzeugt werden, zugeführt werden. Die abgeleiteten Signale werden ebenfalls zum Erkennen eines Heck- oder Frontaufpralls berücksichtigt.

Im Falle des in der Fig. 3 gezeigten Ausführungsbeispiels werden jeweils auch abgeleitete Signale der beiden Beschleunigungssignale zum Ermitteln der ausgewerteten Beschleunigungssignale verwendet.

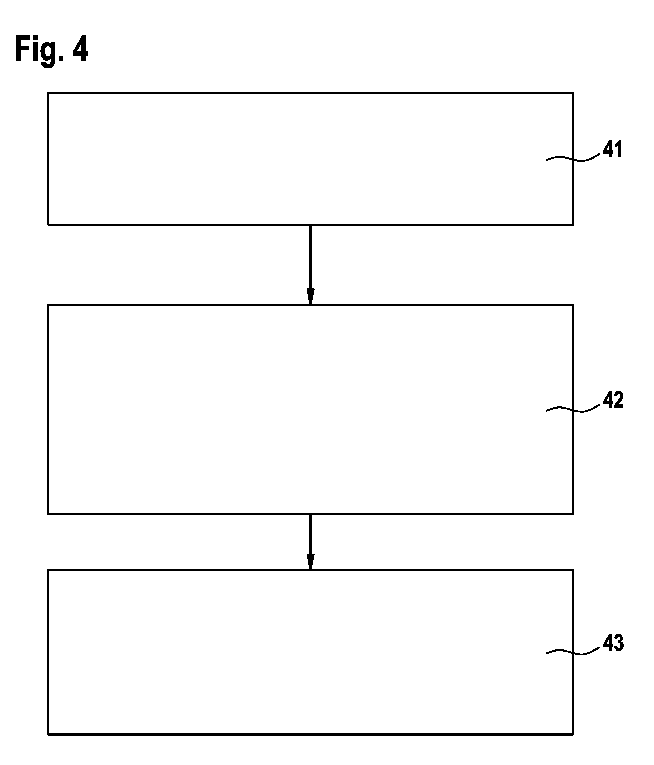

Somit ergibt sich ein in der Fig. 4 dargestellter Verlauf zum Erkennen eines Front- oder Heckaufpralls des Personenkraftwagen 31. Durch eine Beschleunigung des Personenkraftwagens 31 erzeugen die Beschleunigungssensoren 5, 7 Beschleunigungssignale in Fahrtrichtung des Personenkraftwagens 1 (Schritt 41). Die Bescheunigungssignale werden dem Mikroprozessor 36 zugeführt, der die beiden Beschleunigungssignale separat mit dem Auswertealgorithmus auswertet, der für den zentralen Beschleunigungssensor 51 entwickelt wurde (Schritt 42). Aufgrund der beiden ausgewerteten Beschleunigungssignale wird gegebenenfalls der Airbag 21 ausgelöst (Schritt 43).

## Patentansprüche

1. Verfahren zum Auslösen einer Rückhaltevorrichtung (21) eines Fahrzeugs (1), aufweisend folgende Verfahrensschritte:
- Erzeugen eines ersten Beschleunigungssignals mit einem in einer ersten Fahrzeughälfte (3) bezüglich der Längsachse (2) des Fahrzeugs (1) angeordneten ersten Beschleunigungssensor (5),
- Erzeugen eines zweiten Beschleunigungssignals mit einem in einer zweiten Fahrzeughälfte (4) bezüglich der Längsachse (2) des Fahrzeugs (1) angeordneten zweiten Beschleunigungssensor (7), wobei die beiden Beschleunigungssensoren (5, 7) jeweils eine Beschleunigung des Fahrzeugs (1) in Fahrtrichtung aufnehmen,
- Erzeugen eines dritten Beschleunigungssignals aus dem ersten und zweiten Beschleunigungssignal durch Kombinieren des ersten und zweiten Beschleunigungssignals,
- Auswerten des dritten Beschleunigungssignals mit einem Auswertealgorithmus, der für ein zentrales Beschleunigungssignal erstellt wurde, das einem zentral an einem weiteren Fahrzeug (50) angeordneten zentralen Beschleunigungssensor (51) zugeordnet ist und eine Beschleunigung des weiteren Fahrzeugs (50) in Fahrtrichtung aufnimmt, und
- Auslösen einer Rückhaltevorrichtung (21) des Fahrzeugs (1) aufgrund der Auswertung des dritten Beschleunigungssignals.

2. Verfahren nach Anspruch 1, bei dem das dritte Beschleunigungssignal durch Mittelwertbildung des ersten und zweiten Beschleunigungssignals gebildet wird und/oder das dritte Beschleunigungssignal der Maximal- oder Minimalwert des ersten und zweiten Beschleunigungssignals ist.

3. Verfahren nach Anspruch 1 oder 2, bei dem der Auswertealgorithmus wenigstens eine Unterprogrammroutine umfasst, die bei Verwendung des zentralen Beschleunigungssensors (51) dafür vorgesehen ist, zusätzlich wenigstens ein aus dem zentralen Beschleunigungssignal abgeleitetes Signal für das Auslösen der Rückhaltevorrichtung (21) auszuwerten, und der Unterprogrammroutine des Auswertealgorithmus anstelle dieses abgeleiteten Signals ein aus dem ersten, zweiten und/oder dritten Beschleunigungssignal abgeleitetes Signal zugeführt wird.

4. Verfahren zum Auslösen einer Rückhaltevorrichtung (21) eines Fahrzeugs (31), aufweisend folgende Verfahrensschritte:
- Erzeugen eines ersten Beschleunigungssignals mit einem in einer ersten Fahrzeughälfte (3) bezüglich der Längsachse (2) des Fahrzeugs (31) angeordneten ersten Beschleunigungssensors (5), wobei das erste Beschleunigungssignal einer Beschleunigung des Fahrzeugs (31) in Fahrtrichtung aufnimmt,
- Auswerten des ersten Beschleunigungssignals mit einem Auswertealgorithmus, der für ein zentrales Beschleunigungssignal erstellt wurde, das von einem zentral an einem weiteren Fahrzeug (50) angeordneten zentralen Beschleunigungssensor (51) stammt, der eine Beschleunigung in Fahrtrichtung des weiteren Fahrzeugs (50) aufnimmt,
- Erzeugen eines zweiten Beschleunigungssignals mit einem in einer zweiten Fahrzeughälfte (4) bezüglich der Längsachse (2) des Fahrzeugs (31) angeordneten zweiten Beschleunigungssensors (7), wobei das zweite Beschleunigungssignal eine Beschleunigung in Fahrtrichtung des Fahrzeugs (31) aufnimmt,
- Auswerten des zweiten Beschleunigungssignals mit dem Auswertealgorithmus und
- Auslösen einer Rückhaltevorrichtung (21) des Fahrzeugs (31) aufgrund des ersten und zweiten ausgewerteten Beschleunigungssignals.

5. Verfahren nach Anspruch 4, bei dem für das Auslösen der Rückhaltevorrichtung (21) durch Kombinieren eines dem ersten ausgewerteten Beschleunigungssignal zugeordneten ersten Signals und dem zweiten ausgewerteten Beschleunigungssignal zugeordneten zweiten Signals ein Auslösesignal zum Auslösen der Rückhaltevorrichtung (21) erzeugt wird.

6. Verfahren nach Anspruch 4 oder 5, bei dem der Auswertealgorithmus wenigstens eine Unterprogrammroutine umfasst, die bei Verwendung des zentralen Beschleunigungssensors (51) dafür vorgesehen ist, zusätzlich wenigstens ein aus dem zentralen Beschleunigungssignal abgeleitetes Signal für das Auslösen der Rückhaltevorrichtung (21) auszuwerten, und die Auswertung des ersten und/oder zweiten Beschleunigungssignals sich auch auf eine Auswertung eines aus dem ersten und/oder zweiten Beschleunigungssignal abgeleiteten Signals stützt.

7. Vorrichtung zum Auslösen einer Rückhaltevorrichtung (21) eines Fahrzeugs (1) mit einer ersten Fahrzeughälfte (3) und einer zweiten Fahrzeughälfte (4) bezüglich der Längsachse (2) des Fahrzeugs (1), aufweisend
- einen in der ersten Fahrzeughälfte (3) angeordneten ersten Beschleunigungssensor (5) zum Erzeugen eines ersten Beschleunigungssignals in Fahrtrichtung,
- einen in der zweiten Fahrzeughälfte (4) angeordneten zweiten Beschleunigungssensor (7) zum Erzeugen eines zweiten Beschleunigungssignals in Fahrtrichtung und
- eine Auswertevorrichtung (15), auf der ein Auswertealgorithmus läuft, der für ein zentrales Beschleunigungssignal erstellt wurde, das einem zentral an einem weiteren Fahrzeug (50) angeordneten zentralen Beschleunigungssensor (51) zugeordnet ist und eine Beschleunigung des weiteren Fahrzeugs (50) in Fahrtrichtung aufnimmt, wobei die Auswertevorrichtung (15) ein drittes Beschleunigungssignal durch Kombinieren des ersten und zweiten Beschleunigungssignals erzeugt und mit dem Auswertealgorithmus das dritte Beschleunigungssignal auswertet.

8. Vorrichtung nach Anspruch 7, bei der die Auswertevorrichtung (15) das dritte Beschleunigungssignal durch Mittelwertbildung und/oder durch Maximal- oder Minimalwertbestimmung des ersten und zweiten Beschleunigungssignals bildet.

9. Vorrichtung nach Anspruch 7 oder 8, bei der der Auswertealgorithmus wenigstens eine Unterprogrammroutine umfasst, die bei Verwendung des zentralen Beschleunigungssensors (51) dafür vorgesehen ist, zusätzlich wenigstens ein aus dem zentralen Beschleunigungssignal abgeleitetes Signal für das Auslösen der Rückhaltevorrichtung (21) auszuwerten, und der Unterprogrammroutine des Auswertealgorithmus anstelle dieses abgeleiteten Signals ein aus dem ersten, zweiten und/oder dritten Beschleunigungssignal abgeleitetes Signal zuzuführen.

10. Vorrichtung zum Auslösen einer Rückhaltevorrichtung (21) eines Fahrzeugs (31) mit einer ersten Fahrzeughälfte (3) und einer zweiten Fahrzeughälfte (4) bezüglich der Längsachse (2) des Fahrzeugs (31), aufweisend
- einen in der ersten Fahrzeughälfte (3) angeordneten ersten Beschleunigungssensor (5) zum Erzeugen eines ersten Beschleunigungssignals in Fahrtrichtung des Fahrzeugs (31),
- einen in der zweiten Fahrzeughälfte (4) angeordneten zweiten Beschleunigungssensor (7) zum Erzeugen eines zweiten Beschleunigungssignals in Fahrtrichtung des Fahrzeugs (31),
- eine Auswertevorrichtung (35), auf der ein Auswertealgorithmus läuft, der für ein zentrales Beschleunigungssignal erstellt wurde, das eine Beschleunigung eines weiteren Fahrzeugs (50) in Fahrtrichtung aufnimmt und einem am weiteren Fahrzeug (50) zentral angeordneten Beschleunigungssensor (51) zugeordnet ist, wobei die Auswertevorrichtung (35) das erste Beschleunigungssignal und das zweite Beschleunigungssignal mit dem Auswertealgorithmus auswertet und ein Auslösesignal für eine Rückhaltevorrichtung (21) des Fahrzeugs aufgrund der beiden ausgewerteten Beschleunigungssignale erzeugt.

11. Vorrichtung nach Anspruch 10, bei der der Auswertealgorithmus wenigstens eine Unterprogrammroutine umfasst, die bei Verwendung des zentralen Beschleunigungssensors (51) dafür vorgesehen ist, zusätzlich wenigstens ein aus dem zentralen Beschleunigungssignal abgeleitetes Signal für das Auslösen der Rückhaltevorrichtung (21) auszuwerten, und die Auswertung des ersten und/oder zweiten Beschleunigungssignals sich auch auf einer Auswertung eines aus dem ersten und/oder zweiten Beschleunigungssignal abgeleiteten Signals stützt.
